# FASCICULE DE BREVET EUROPEEN

(11) **EP 3 226 732 B1**
(45) Date de publication et mention de la délivrance du brevet: **24.06.2020**
(21) Numéro de dépôt: 15821109.4
(22) Date de dépôt: 01.12.2015
(51) Int. Cl.: A47J 37/12, A47J 37/06

(54) **APPAREIL ET PROCEDE DE CUISSON ET/OU RECHAUFFAGE**
VORRICHTUNG UND VERFAHREN ZUM GAREN UND/ODER AUFWÄRMEN
APPLIANCE AND METHOD FOR COOKING AND/OR REHEATING

(30) Priorité: 02.12.2014 FR 1461776
(43) Date de publication de la demande: 11.10.2017
(73) Titulaire: SEB S.A., 69130 Ecully (FR)
(72) Inventeur: DELRUE, Olivier, 21260 Selongey (FR)
(74) Mandataire: Bourrières, Patrice
(86) Numéro de dépôt international: PCT/FR2015/053287
(87) Numéro de publication internationale: WO 2016/087772

(56) Documents cités:
- WO-A1-2014/174466
- DE-U1- 8 811 683
- DE-U1- 20 002 682
- US-A1- 2010 089 248

## Description

La présente invention concerne de manière générale un procédé et un appareil de cuisson et/ou de réchauffage d'aliments faisant intervenir un flux d'air.

Il est connu dans l'art antérieur des appareils de cuisson à flux d'air, et en particulier des appareils de cuisson à flux d'air pour cuire des aliments tels que des frites avec très peu d'huile. Le document WO2006000700 décrit un tel appareil de cuisson. En contrepartie, ces appareils présentent notamment l'inconvénient de ne pas pouvoir chauffer efficacement des aliments sous forme liquide ou plongés dans un liquide. En effet, le chauffage par flux d'air chaud d'un liquide jusqu'à ébullition par exemple ne peut pas être effectué dans un temps raisonnable, ce qui limite les possibilités d'utilisation d'un tel appareil. De plus, les qualités organoleptiques d'une soupe préparée avec un tel mode de chauffage (lent) seraient dégradées.

Le document WO 2014/174466 décrit une friteuse à air et un procédé avec des moyens de chauffage additionnels sous la cuve de cuisson qui chauffent les parois externes du récipient.

Un but de la présente invention est de répondre aux inconvénients du document de l'art antérieur mentionné ci-dessus et en particulier, tout d'abord, de proposer un procédé rapide et un appareil efficace de cuisson et/ou de réchauffage d'aliments même sous forme liquide, l'appareil étant initialement conçu pour cuire les aliments avec un flux d'air chaud.

Pour cela un premier aspect de l'invention concerne un procédé de cuisson et/ou de réchauffage d'aliments contenus dans une cuve de cuisson d'un appareil de cuisson à flux d'air, comprenant les étapes consistant à :
- chauffer de manière continue une paroi externe de la cuve de cuisson avec un élément électrique de chauffe de la cuve, agencé en regard de la paroi externe, de sorte à créer un flux de chaleur à travers la cuve de cuisson pour chauffer et/ou cuire les aliments dans la cuve de cuisson,
- refroidir l'élément électrique de chauffe de la cuve en créant de manière temporaire un flux d'air avec des moyens de ventilation. Le procédé selon l'invention propose de chauffer de façon continue la cuve pour chauffer les aliments à travers celle-ci. Il est fait référence à une paroi externe, il faut comprendre que l'on entend par là que la cuve est un récipient avec une épaisseur séparant une paroi interne (celle qui est au contact des aliments) de la paroi externe en question. Par exemple on peut placer l'élément électrique chauffant sous la cuve de cuisson pour chauffer sa paroi externe inférieure. Il est à noter que l'invention prévoit de chauffer de façon continue la paroi externe, cela signifie que l'élément électrique de chauffe de la cuve est alimenté de façon continue en électricité au cours de la cuisson. Au lieu de l'éteindre pour éviter les surchauffes, l'invention prévoit de générer de manière intermittente un flux d'air avec les moyens de ventilation déjà présents dans l'appareil. Il n'y a donc pas besoin d'installer de moyens de régulation de l'alimentation de l'élément électrique de chauffe de la cuve. Enfin, on comprend que le principal mode de chauffage des aliments est la conduction à travers la cuve de cuisson, qui est plus efficace que la convection dans le cas où les aliments sont sous forme liquide ou plongés dans un liquide.

Avantageusement, il est prévu de continuer à alimenter en électricité l'élément électrique de chauffe de la cuve pendant l'étape de refroidissement.

Avantageusement, l'étape de chauffage continu de la cuve de cuisson est réalisée à puissance constante. Il faut comprendre par là que la puissance d'alimentation de l'élément électrique de chauffe de la cuve reste comprise dans une plage de puissance allant de 90% à 110% d'une puissance nominale.

Avantageusement, il est prévu une étape initiale de chauffage seul jusqu'à atteindre une première température. Cette première étape permet d'atteindre rapidement la première température.

Avantageusement, il est prévu d'initier une première étape de refroidissement par ventilation, dès que la première température est atteinte.

Avantageusement, les étapes temporaires de refroidissement par ventilation sont prévues de durer un premier temps prédéterminé. Cela permet par exemple de garder la cuve de cuisson dans une plage de températures idéales pour cuire rapidement les aliments. On peut envisager que cette plage de température aille d'une deuxième température, inférieure à la première température, jusqu'à une troisième température, inférieure à la deuxième température.

Par exemple, la température peut être mesurée dans la cuve de cuisson, au niveau des aliments à cuire. En d'autres termes la température mesurée est celle de l'eau contenue dans la cuve de cuisson, et dans de cas, la première température peut être comprise entre 95°C et 100°C, la deuxième température peut être comprise entre 90°C et 100°C, et la troisième température peut être comprise entre 70°C et 90°C, bornes comprises pour tous les intervalles. Le système est équivalent à un système comprenant un thermostat, mais fonctionne sans ce thermostat qui est compliqué à installer pour mesurer correctement les températures dans l'enceinte de cuisson.

En alternative, la température peut être mesurée au niveau de l'élément chauffant, sur une de ses surfaces qui est en regard avec la cuve de cuisson et dans ce cas, la première température peut être comprise entre 140°C et 160°C, la deuxième température peut être comprise entre 120°C et 140°C, et la troisième température peut être comprise entre 100°C et 120°C, bornes comprises pour tous les intervalles. On peut utiliser à cet effet un thermocouple collé sur la surface en question.

Avantageusement, les étapes temporaires de refroidissement par ventilation sont espacées d'un deuxième temps prédéterminé de chauffage seul, supérieur au premier temps prédéterminé.

Avantageusement, les aliments à cuire sont sous forme liquide ou plongés dans un liquide.

Un second aspect de l'invention concerne un appareil de cuisson et/ou de réchauffage à flux d'air, comprenant :
- une cuve de cuisson agencée pour contenir des aliments à cuire,
- au moins un élément électrique de chauffe de la cuve,
- des moyens de ventilation agencés pour générer un flux d'air,
caractérisé en ce que ledit au moins un élément électrique de chauffe de la cuve est agencé en regard d'une paroi externe de la cuve de cuisson, de sorte à chauffer la paroi externe de la cuve de cuisson de manière continue lors de la cuisson, de sorte à créer un flux de chaleur à travers la cuve de cuisson pour chauffer et/ou cuire les aliments dans la cuve de cuisson et en ce que l'appareil de cuisson comprend des moyens de régulation des moyens de ventilation, pour générer de manière temporaire le flux d'air, de sorte à refroidir l'élément électrique de chauffe de la cuve.

Avantageusement, l'appareil est dépourvu de moyens de régulation de l'alimentation de l'élément électrique de chauffe de la cuve pendant la cuisson. L'invention consiste donc à laisser constamment sous tension l'élément électrique de chauffe de la cuve, et à refroidir ce dernier par un flux d'air intermittent. L'appareil reste simple, mais permet de cuire et/ou réchauffer des aliments liquides par conduction au travers de la cuve de cuisson, sans risque de surchauffe de l'élément électrique de chauffe de la cuve ou de son environnement immédiat.

Avantageusement, l'appareil comprend des moyens de brassage des aliments dans la cuve de cuisson.

Avantageusement, la cuve de cuisson comprend un puits de passage d'une hauteur suffisante pour laisser passer les moyens de brassage, sans risquer d'écoulement au travers du puits de passage du liquide contenu dans la cuve de cuisson.

Avantageusement, l'appareil comprend des moyens de chauffage du flux d'air, agencés dans une gaine d'air de l'appareil de cuisson, la cuve de cuisson étant agencée entre l'élément électrique de chauffe de la cuve et une sortie de la gaine d'air. Les moyens de chauffage du flux d'air sont distincts et différents de l'élément électrique de chauffe de la cuve de cuisson. Typiquement, les moyens de chauffage du flux d'air peuvent être un filament enroulé ou une source halogène et sont placés dans une gaine de ventilation qui dirige le flux d'air vers l'intérieur de la cuve de cuisson. Lorsque l'on désire cuire et/ou réchauffer des aliments sous forme liquide, seul l'élément électrique de chauffe de la cuve est alimenté.

Avantageusement, l'élément électrique de chauffe de la cuve est agencé à moins de trois millimètres de la cuve de cuisson. Cette mise en œuvre garantit que la majeure partie du flux de chaleur généré par l'élément électrique de chauffe de la cuve passe effectivement dans la matière de la cuve de cuisson, principalement par rayonnement et conduction.

Avantageusement, l'élément électrique de chauffe de la cuve est en contact avec la cuve de cuisson.

Avantageusement, l'élément électrique de chauffe de la cuve est un élément de chauffage sérigraphié sur un support. On peut prévoir que la sérigraphie est uniquement réalisée sur une surface du support en regard de la cuve de cuisson, de sorte à diriger le flux de chaleur directement vers la cuve de cuisson.

Avantageusement, l'appareil comprend un boîtier externe, et l'élément électrique de chauffe de la cuve est agencé entre la cuve de cuisson et une paroi du boîtier externe.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un appareil de cuisson et/ou de réchauffage d'aliments selon la présente invention ;
- la figure 2 représente un graphe température / temps au sein de l'appareil de la figure 1, lorsque le procédé selon l'invention est exécuté.

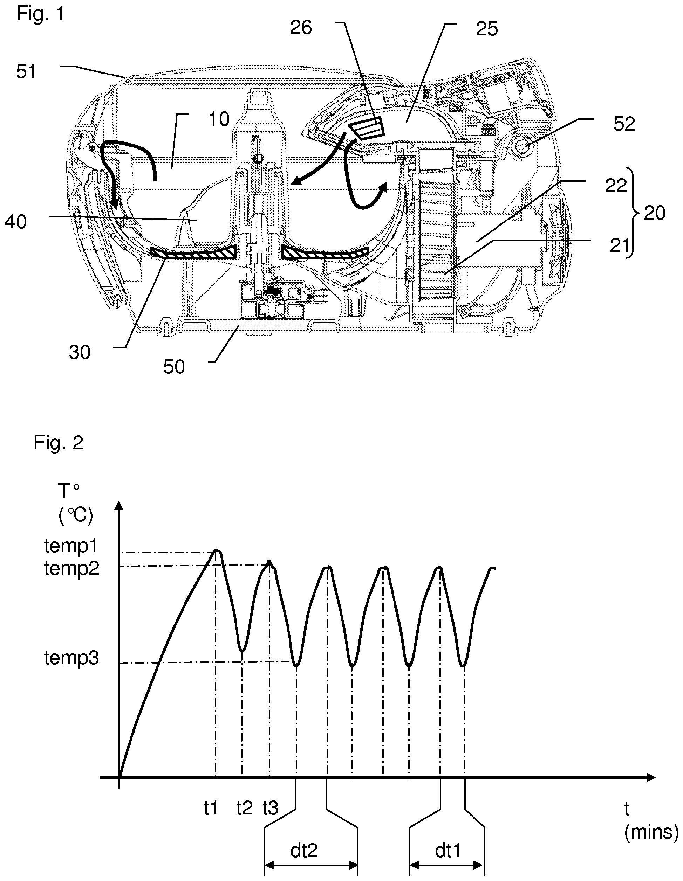

La figure 1 représente un appareil de cuisson et/ou réchauffage d'aliments qui comprend un boîtier externe 50 avec un couvercle 51 articulé qui peut pivoter autour d'un axe de rotation 52 pour accéder à une enceinte de cuisson.

Une cuve de cuisson 10 est agencée dans l'enceinte de cuisson sous le couvercle 51 et une pale 40 forme des moyens de brassage agencés pour brasser, remuer, retourner ou mélanger des aliments placés dans la cuve de cuisson 10.

Des moyens de ventilation 20 comprennent un moto ventilateur 22 qui entraîne en rotation une roue 21 afin de former un ventilateur centrifuge qui aspire de l'air au centre de la roue 21 pour le diriger vers une gaine d'air 25, solidaire du couvercle 51.

La gaine d'air 25 dirige le flux d'air directement vers l'intérieur de la cuve de cuisson 10 et les aliments qui y sont placés. Pour cuire des frites (pommes de terre coupées en bâtons), on peut prévoir des moyens de chauffage du flux d'air 26 et les agencer directement dans la gaine d'air 25. Le flux d'air est donc chauffé et projeté directement sur les frites qui seront alors cuites par convection et éventuellement par rayonnement si les moyens de chauffage du flux d'air 26 sont partiellement en regard de la sortie de la gaine d'air 25.

Si par contre, les aliments à cuire sont sous forme liquide ou plongés dans un liquide, la cuisson par le flux d'air chaud sera inefficace et longue.

Pour y remédier, l'appareil comprend un élément électrique de chauffe de la cuve 30, agencé sous la cuve de cuisson 10, pour chauffer sa paroi externe inférieure, et créer un flux de chaleur à travers la cuve de cuisson 10 pour chauffer les aliments qui y sont contenus (une soupe par exemple).

L'élément électrique de chauffe de la cuve 30 peut être une résistance blindée ou de préférence un élément sérigraphié sur un support, et placé juste sous la cuve de cuisson 10, de sorte à la chauffer efficacement. On peut envisager de le placer à proximité immédiate (à moins de trois millimètres par exemple) ou même en contact avec la cuve de cuisson 10. On peut en alternative envisager d'intégrer l'élément électrique de chauffe de la cuve 30 directement sur la cuve de cuisson 10, mais il faut alors prévoir des contacts électriques de sécurité entre la cuve de cuisson 10 et le reste de l'appareil.

Pour minimiser les coûts, l'élément électrique de chauffe de la cuve 30 n'est pas régulé en puissance ni en alimentation lors de son utilisation pour cuire et/ou réchauffer des liquides. Il est simplement mis sous tension tout au long du cycle de cuisson et /ou réchauffage. On peut envisager de l'alimenter à une puissance constante de 700 watts par exemple.

Cependant, pour éviter les surchauffes dues à une alimentation continue de l'élément électrique de chauffe de la cuve 30, il est prévu dans le cadre de la cuisson de liquides, de refroidir de manière intermittente l'élément électrique de chauffe de la cuve 30, en activant les moyens de ventilation 20 de manière temporaire. Il n'est pas prévu dans ce cas d'alimenter les moyens de chauffage du flux d'air 26.

La figure 2 illustre l'évolution des températures dans l'enceinte de cuisson lors de la mise en œuvre du procédé selon l'invention, pour cuire et/ou réchauffer des liquides. En début de cycle, c'est-à-dire jusqu'au temps t1, le procédé ne procède qu'à un chauffage, jusqu'à atteindre une première température temp1 qui est choisie pour être inférieure à une température qui provoque des dégâts ou des risques liés à une surchauffe.

A ce moment t1 (par exemple 15 minutes), les moyens de ventilation 20 sont activés jusqu'au moment t2, et la température de l'enceinte de cuisson descend. Il est à noter que l'élément électrique de chauffe de la cuve 30 est toujours alimenté, mais sa puissance ne peut compenser le refroidissement imposé par le flux d'air, de sorte que la température globale baisse.

A ce moment t2, le flux d'air est coupé, et la température de l'enceinte de cuisson recommence à monter. Jusqu'à une deuxième température temp2 atteinte au moment t3, et les moyens de ventilation sont réenclenchés, pour faire descendre la température jusqu'à une troisième température temp3.

Le temps de ventilation est dt1, et peut par exemple être fixé à deux minutes, plus ou moins trente secondes. Le temps de chauffage entre deux périodes de ventilation est dt2 et peut être fixé à quatre minutes plus ou moins trente secondes. Pour affiner les températures mentionnées dans la description générale ci dessus, on peut moduler les temps de ventilation et de chauffage seul.

D'une manière générale, le temps de ventilation dt1 est inférieur au temps de chauffage seul dt2.

Dans le cas où la température est mesurée au niveau de l'élément électrique de chauffe de la cuve 30, sur une de ses surfaces qui est en regard avec la cuve de cuisson 10, par exemple, la première température temp1 peut être comprise entre 140°C et 160°C, la deuxième température temp2 peut être comprise entre 120°C et 140°C, et la troisième température temp3 peut être comprise entre 100°C et 120°C, bornes comprises pour tous les intervalles. Le liquide dans la cuve de cuisson 10 est alors porté rapidement à ébullition ou à une température très proche de l'ébullition, pour mijoter les aliments à cuire.

## Revendications

1. Procédé de cuisson et/ou de réchauffage d'aliments contenus dans une cuve de cuisson (10) d'un appareil de cuisson à flux d'air, qui comprend les étapes suivantes :
- chauffer de manière continue une paroi externe de la cuve de cuisson (10) avec un élément électrique de chauffe de la cuve (30), agencé en regard de la paroi externe, de sorte à créer un flux de chaleur à travers la cuve de cuisson (10) pour chauffer et/ou cuire les aliments dans la cuve de cuisson (10), **caractérisé en ce qu'**il comprend une étape consistant à:
- refroidir l'élément électrique de chauffe de la cuve (30) en créant de manière temporaire un flux d'air avec des moyens de ventilation (20).

2. Procédé selon la revendication précédente, dans lequel il est prévu une étape initiale de chauffage seul jusqu'à atteindre une première température (temp1).

3. Procédé selon la revendication précédente, dans lequel il est prévu d'initier une première étape de refroidissement par ventilation, dès que la première température (temp1) est atteinte.

4. Procédé selon l'une des revendications précédentes, dans lequel les étapes temporaires de refroidissement par ventilation sont prévues de durer un premier temps prédéterminé (dt1).

5. Procédé selon la revendication précédente, dans lequel les étapes temporaires de refroidissement par ventilation sont espacées d'un deuxième temps prédéterminé (dt2) de chauffage seul, supérieur au premier temps prédéterminé (dt1).

6. Procédé selon l'une des revendications précédentes, dans lequel les aliments à cuire sont sous forme liquide ou plongés dans un liquide.

7. Appareil de cuisson et/ou de réchauffage à flux d'air, comprenant :
- une cuve de cuisson (10) agencée pour contenir des aliments à cuire,
- au moins un élément électrique de chauffe de la cuve (30),
- des moyens de ventilation (20) agencés pour générer un flux d'air, ledit au moins un élément électrique de chauffe de la cuve (30) étant agencé en regard d'une paroi externe de la cuve de cuisson (10), de sorte à chauffer la paroi externe de la cuve de cuisson (10) de manière continue lors de la cuisson, de sorte à créer un flux de chaleur à travers la cuve de cuisson (10) pour chauffer et/ou cuire les aliments dans la cuve de cuisson (10), **caractérisé en ce que** l'appareil de cuisson comprend des moyens de régulation des moyens de ventilation (20), pour générer de manière temporaire le flux d'air, de sorte à refroidir l'élément électrique de chauffe de la cuve (30).

8. Appareil de cuisson et/ou de réchauffage selon la revendication précédente, **caractérisé en ce qu'**il est dépourvu de moyens de régulation de l'alimentation de l'élément électrique de chauffe de la cuve (30) pendant la cuisson.

9. Appareil de cuisson et/ou de réchauffage selon l'une des revendications 7 ou 8, **caractérisé en ce qu'**il comprend des moyens de brassage des aliments dans la cuve de cuisson (10).

10. Appareil de cuisson et/ou de réchauffage selon l'une des revendications 7 à 9, **caractérisé en ce qu'**il comprend des moyens de chauffage du flux d'air (26), agencés dans une gaine d'air (25) de l'appareil de cuisson, la cuve de cuisson (10) étant agencée entre l'élément électrique de chauffe de la cuve (30) et une sortie de la gaine d'air (25).

11. Appareil de cuisson et/ou de réchauffage selon l'une des revendications 7 à 10, **caractérisé en ce que** l'élément électrique de chauffe de la cuve (30) est agencé à moins de trois millimètres de la cuve de cuisson (10)

12. Appareil de cuisson et/ou de réchauffage selon la revendication précédente, dans lequel l'élément électrique de chauffe de la cuve (30) est en contact avec la cuve de cuisson (10).

13. Appareil de cuisson et/ou de réchauffage selon l'une des revendications 7 à 12, **caractérisé en ce que** l'élément électrique de chauffe de la cuve (30) est un élément de chauffage sérigraphié sur un support.

14. Appareil de cuisson et/ou de réchauffage selon l'une des revendications 7 à 13, comprenant un boîtier externe (50), et dans lequel l'élément électrique de chauffe de la cuve (30) est agencé entre la cuve de cuisson (10) et une paroi du boîtier externe (50).

## Patentansprüche

1. Verfahren zum Kochen und / oder Nachheizen von Lebensmitteln, die in einem Kochbehälter (10) eines Kochgeräts mit Luftstrom enthalten sind, das die folgenden Schritte umfasst:
- kontinuierliches Erhitzen einer Außenwand des Kochbehälters (10) mit einem elektrischen Heizelement des Behälters (30), das gegenüber der Außenwand angeordnet ist, um einen Wärmefluss durch den Kochbehälter (10) zu erzeugen, um die Lebensmittel in dem Kochbehälter (10) zu erhitzen und / oder zu kochen,
**dadurch gekennzeichnet, dass** es einen Schritt umfasst, der besteht in:
- Kühlen des elektrischen Heizelements des Behälters (30) durch vorübergehendes Erzeugen eines Luftstroms mit Belüftungsmitteln (20).

2. Verfahren nach dem vorstehenden Anspruch, wobei ein einzelner, anfänglicher Schritt des Erhitzens bis zum Erreichen einer ersten Temperatur (temp1) vorgesehen ist.

3. Verfahren nach dem vorstehenden Anspruch, wobei vorgesehen ist, einen ersten Schritt des Abkühlens durch Belüftung einzuleiten, sobald die erste Temperatur (temp1) erreicht ist.

4. Verfahren nach einem der vorstehenden Ansprüche, wobei die vorübergehenden Schritte des Abkühlens durch Belüftung für eine Dauer einer ersten vorbestimmten Zeit (dt1) vorgesehen sind.

5. Verfahren nach dem vorstehenden Anspruch, wobei die vorübergehenden Schritte des Abkühlens durch Belüftung nur um eine zweite vorbestimmte Zeit (dt2) der Erhitzung beabstandet sind, die größer als die erste vorbestimmte Zeit (dt1) ist.

6. Verfahren nach einem der vorstehenden Ansprüche, wobei die zu kochenden Lebensmittel in flüssiger Form vorliegen oder in eine Flüssigkeit eingetaucht sind.

7. Koch- und / oder Nachheizgerät mit Luftstrom, umfassend:
- einen Kochbehälter (10), der angeordnet ist, um zu kochende Lebensmittel zu enthalten,
- mindestens ein elektrisches Heizelement des Behälters (30),
- Belüftungsmittel (20), die zum Erzeugen eines Luftstroms angeordnet sind, wobei das mindestens eine elektrische Heizelement des Behälters (30) gegenüber einer Außenwand des Kochbehälters (10) angeordnet ist, um die Außenwand des Kochbehälters (10) während des Kochens kontinuierlich zu erhitzen, um einen Wärmefluss durch das Kochgefäß (10) zu erzeugen, um die Nahrungsmittel in dem Kochgefäß (10) zu erhitzen und / oder zu kochen, **dadurch gekennzeichnet,**
**dass** das Kochgerät Mittel zum Regulieren der Belüftungsmittel (20) zum vorübergehenden Erzeugen des Luftstroms umfasst, um das elektrische Heizelement des Behälters (30) zu kühlen.

8. Koch- und / oder Nachheizgerät nach dem vorstehenden Anspruch, **dadurch gekennzeichnet, dass** es frei von Mitteln zur Regelung der Versorgung des elektrischen Heizelements des Behälters (30) während des Kochens ist.

9. Koch- und / oder Nachheizgerät nach einem der Ansprüche 7 oder 8, **dadurch gekennzeichnet, dass** es Mittel zum Rühren von Lebensmitteln in dem Kochbehälter (10) umfasst.

10. Koch- und / oder Nachheizgerät nach einem der Ansprüche 7 bis 9, **dadurch gekennzeichnet, dass** es Mittel zum Erhitzen des Luftstroms (26) umfasst, die in einem Luftkanal (25) des Kochgeräts angeordnet sind, wobei der Kochbehälter (10) zwischen dem elektrischen Heizelement des Behälters (30) und einem Auslass des Luftkanals (25) angeordnet ist.

11. Koch- und / oder Nachheizgerät nach einem der Ansprüche 7 bis 10, **dadurch gekennzeichnet, dass** das elektrische Heizelement des Behälters (30) höchstens drei Millimeter von dem Kochbehälter (10) angeordnet ist.

12. Koch- und / oder Nachheizgerät nach dem vorstehenden Anspruch, wobei das elektrische Heizelement des Behälters (30) mit dem Kochbehälter (10) in Kontakt steht.

13. Koch- und / oder Nachheizgerät nach einem der Ansprüche 7 bis 12, **dadurch gekennzeichnet, dass** das elektrische Heizelement des Behälters (30) ein Heizelement ist, das durch Siebdruck auf einen Träger gedruckt ist.

14. Koch- und / oder Nachheizgerät nach einem der Ansprüche 7 bis 13, umfassend ein Außengehäuse (50), und wobei das elektrische Heizelement des Behälters (30) zwischen dem Kochbehälter (10) und einer Wand des Außengehäuses (50) angeordnet ist.

## Claims

1. Method for cooking and/or reheating food contained in a cooking vessel (10) of a hot air cooking appliance, which comprises the following steps:
- continuously heating an outer wall of the cooking vessel (10) with an electric heating element of the vessel (30), arranged facing the outer wall, in such a way as to create a flow of heat through the cooking vessel (10) to heat and/or cook the food in the cooking vessel (10), **characterised in that** it comprises a step consisting of:
- cooling the electric heating element of the vessel (30) by temporarily creating an air flow with means of ventilation (20).

2. Method according to the preceding claim, wherein an initial step of heating is provided alone until a first temperature (temp1) is reached.

3. Method according to the preceding claim, wherein it is provided to initiate a first step of cooling by ventilation, as soon as the first temperature (temp1) is reached.

4. Method according to one of the preceding claims, wherein the temporary steps of cooling by ventilation are provided to last a predetermined first time (dt1).

5. Method according to the preceding claim, wherein the temporary steps of cooling by ventilation are spaced by a second predetermined time (dt2) of heating alone, longer than the first predetermined time (dt1).

6. Method according to one of the preceding claims, wherein the food to be cooked is in liquid form or immersed in a liquid.

7. Appliance for cooking and/or reheating with an air flow, comprising:
- a cooking vessel (10) arranged to contain food to be cooked,
- at least one electric heating element of the vessel (30),
- means of ventilation (20) arranged to generate a flow of air,
said at least one electric heating element of the vessel (30) being arranged facing an external wall of the cooking vessel (10), in such a way as to heat the outer wall of the cooking vessel (10) continuously during cooking, in such a way as to create a flow of heat through the cooking vessel (10) to heat and/or cook the food in the cooking vessel, **characterised in that** the cooking appliance comprises means for adjusting the means of ventilation (20), to temporarily generate the air flow, in such a way as to cool the electric heating element of the vessel (30).

8. Appliance for cooking and/or reheating according to the preceding claim, **characterised in that** it is devoid of means for adjusting the power supply of the electric heating element of the vessel (30) during cooking.

9. Appliance for cooking and/or reheating according to one of claims 7 or 8, **characterised in that** it comprises means of stirring food in the cooking vessel (10).

10. Appliance for cooking and/or reheating according to one of claims 7 to 9, **characterised in that** it comprises means for heating a flow of air (26), arranged in an air shaft (25) of the cooking appliance, the cooking vessel (10) being arranged between the electric heating element of the vessel (30) and an outlet of the air shaft (25).

11. Appliance for cooking and/or reheating according to one of claims 7 to 10, **characterised in that** the electric heating element of the vessel (30) is arranged at least three millimetres from the cooking vessel (10)

12. Appliance for cooking and/or reheating according to the preceding claim, wherein the electric heating element of the vessel (30) is in contact with the cooking vessel (10).

13. Appliance for cooking and/or reheating according to one of claims 7 to 12, **characterised in that** the electric heating element of the vessel (30) is a heating element screen printed on a support.

14. Appliance for cooking and/or reheating according to one of claims 7 to 13, comprising an outer case (50), and wherein the electric heating element of the vessel (30) is arranged between the cooking vessel (10) and a wall of the outer case (50).
